Europäisches Patentamt

European Patent Office

Office européen des brevets

(11) Veröffentlichungsnummer: **0 455 009 A1**

## (12) EUROPÄISCHE PATENTANMELDUNG

(21) Anmeldenummer: 91105576.2

(22) Anmeldetag: 09.04.91

(51) Int. Cl.5: **C08K 9/02, C08K 9/04, C08L 21/00**

(30) Priorität: 21.04.90 DE 4012797

(43) Veröffentlichungstag der Anmeldung:
06.11.91 Patentblatt 91/45

(84) Benannte Vertragsstaaten:
**DE ES FR GB IT SE**

(71) Anmelder: **RHEIN-CHEMIE RHEINAU GMBH**
**Postfach 81 04 09 Mülheimer Strasse 24-28**
**W-6800 Mannheim 81(DE)**

(72) Erfinder: **Preussmann, Rudolf, Prof. Dr.**
**Goethestrasse 50**
**W-6904 Eppelheim(DE)**
Erfinder: **Spiegelhalder, Bertold, Dr.**
**Klostergasse 11**
**W-6900 Heidelberg-Wieblingen(DE)**

(74) Vertreter: **Gremm, Joachim, Dr. et al**
**Bayer AG c/o Zentralbereich Patente, Marken**
**und Lizenzen**
**W-5090 Leverkusen 1, Bayerwerk(DE)**

(54) **Verminderung der Nitrosaminbildung bei der Vulkanisation von Kautschuken.**

(57) Methode zur Verminderung der Nitrosaminbildung bei der Vulkanisation von Kautschukmischungen, die daraus besteht, daß man die für die zu vulkanisierende Kautschukmischung verwendeten anorganischen Zuschlagstoffe - in erster Linie Ruße, Zinkoxid und/oder Silikate - mit Ammoniak oder mit einem primären Amin vorbehandelt.

EP 0 455 009 A1

Das Problem des Auftretens von Nitrosaminen während der Vulkanisation von Kautschuken ist seit langem bekannt. Einige Nitrosamine sind cancerogen, so daß ihre Entstehung oder Anwesenheit möglichst verhindert werden muß. Bereits seit September 1988 besteht die Verpflichtung, die Konzentration von Nitrosaminen am Arbeitsplatz zu vermindern auf maximal 2,5 $\mu$g/m$^3$.

Nitrosamine entstehen bei der Kautschukvulkanisation hauptsächlich durch Nitrosierung sekundärer Amine. Diese ihrerseits sind Spaltprodukte des für die Vulkanisation erforderlichen Beschleunigers. Stickoxide ($NO_x$) finden sich in der Luft und auch in Bestandteilen der Kautschukmischung.

Um die Bildung von Nitrosaminen bei der Kautschukvulkanisation zu verhindern oder wenigstens zu vermindern, kann man prinzipiell

1. sekundäre Amine vermeiden,
2. nitrosierende Agenzien eliminieren,
3. für die Nitrosaminbildung günstige Bedingungen vermeiden,
4. gebildete Nitrosamine entfernen.

Praktisch brauchbar sind nur die Möglichkeiten 1 und 2.

Bei der vorliegenden Erfindung wird die Möglichkeit 2 genutzt, nämlich die Vermeidung nitrosierender Agenzien. Der Erfindung liegt die Erkenntnis zugrunde, daß ein erheblicher Teil des "Nitrosierungspotentials" in solchen Kautschukmischungen in den darin enthaltenen anorganischen Zuschlagstoffen zu finden ist. Es handelt sich hierbei in erster Linie um Ruße mit großen Oberflächen, Zinkoxide und Silikate mit großen Oberflächen. Diese Zuschlagstoffe enthalten das "Nitrosierungspotential" mindestens teilweise in Form von adsorbierten Stickoxiden oder von Nitrit. Dieses Nitrosierungspotential kann bei der Vulkanisation frei werden und dann mit dem aus dem Vulkanisationsbeschleuniger entstehenden sekundären Amin zum Nitrosamin reagieren (sekundäre Amine entstehen beim Erhitzen auch aus den üblichen Vulkanisationsbeschleunigern wie Sulfenamiden, Thiuramen und Carbamaten).

Man kann die Bildung von Nitrosaminen verhindern oder wenigstens reduzieren, wenn man das in den anorganischen Zuschlagstoffen enthaltene Nitrosierungspotential inhibiert oder zerstört.

Gegenstand der Erfindung ist somit eine Methode zur Verminderung der Nitrosaminbildung bei der Vulkanisation von Kautschukmischungen, die daraus besteht, daß man die für die zu vulkanisierende Kautschukmischung verwendeten anorganischen Zuschlagstoffe - in erster Linie Ruße, Zinkoxid und/oder Silikate - mit Ammoniak oder mit einem primären Amin vorbehandelt.

Damit wird erreicht, daß in den Zuschlagstoffen enthaltenes Nitrosierungspotential (wie $NO_x$ oder Nitrit) bei der Vulkanisation nicht mit sekundären Aminen reagiert, sondern mit Ammoniak oder primären Aminen. Die dabei gebildeten Reaktionsprodukte sind nicht stabil und zerfallen unter Bildung von Stickstoff,

Die erfindungsgemäße Vorbehandlung führt in der Regel zu einer dauernden Inhibierung oder Eluminierung des Nitrosierungspotentials mindestens dann, wenn Ammoniak oder primäres Amin in den Zuschlagstoffen verbleibt, z.B. durch Adsorption.

Zur Behandlung der anorganischen Zuschlagstoffe gibt es mehrere, im Prinzip bekannte Methoden. Welche Verfahrensweise man anwendet, richtet sich naturgemäß nach der Art des Zuschlagstoffes und nach den Eigenschaften des Amins.

Wenn man Ammoniak verwendet, kann man den Zuschlagstoff einfach mit gasförmigem Ammoniak bei Zimmertemperatur und Atmosphärendruck begasen. Ähnlich kann man verfahren, wenn man niedrig siedende oder gasförmige primäre Amine verwendet. Sind die Amine flüssig, dann kann man sie in Form von Lösungen in organischen Lösungsmitteln mit den Zuschlagstoffen vermischen und das organische Lösungsmittel entfernen, Letztlich ist es auch möglich, höhersiedende primäre Amine mechanisch mit den Füllstoffen in den üblichen Mischgeräten zu vermischen, In jedem Fall ist nur darauf zu achten, daß die Amine mit den Zuschlagstoffen homogen vermischt sind.

Für die vorliegende Erfindung sind neben dem Ammoniak primäre aliphatische Amine bevorzugt. Besonders bevorzugt sind Alkylmonoamine mit 1 bis 20 C-Atomen in der Alkylgruppe, Alkylendiamine mit 2 bis 20 C-Atomen in der Alkylengruppe sowie Alkylmonoamine, die noch weitere funktionelle Gruppen wie Hydroxylgruppen enthalten. Beispiele für derartige Amine sind Octylamin, Ethylendiamin, Diaminoheptan und Ethanolamin. Zur Behandlung der Zuschlagstoffe kann man im allgemeinen Mengen an Ammoniak bzw, Amin verwenden, die in der Größenordnung von 0,01 bis 5 Gew.-% des Zuschlagstoffs liegen. Die Verwendung der erfindungsgemäß behandelten Zuschlagstoffe bei der Vulkanisation vulkanisierbarer Kautschukmischungen vermindert die Nitrosaminbildung entscheidend oder verhindert sie sogar ganz.

Ausführungsbeispiel

Behandlung eines Zuschlagstoffs

100 g Furnace-Ruß (N 220) wurden in einem 1 l-Erlenmeyerkolben gefüllt und die vorhandene Luft durch Einleiten von gasförmigem Ammoniak vollständig verdrängt. Das Gefäß wurde verschlossen und blieb unter gelegentlichem Umschütteln stehen.

1,0 g des so behandelten Rußes wurden mit 10 ml eines Paraffinöls gemischt und 100 mg "Beschleuniger MOZ" zugefügt. Diese Mischung wird unter Rühren auf 150°C erhitzt und 30 Minuten bei dieser Temperatur gehalten. Die Menge des dabei gebildeten Nitrosomorpholins wird analytisch zu 0,1 μg bestimmt.

Bei Wiederholung dieses Versuchs mit einem nicht vorbehandelten Ruß wurde 3,0 μg Nitrosomorpholin gefunden.

Dieser Modellversuch, der eine Kautschukvulkanisation simuliert, belegt, daß das vorbehandelte Material zu einem um ca. 87 % verminderten Nitrosamingehalt führt.

## Patentansprüche

1. Methode zur Verhinderung der Nitrosaminbildung bei der Vulkanisation von Kautschukmischungen, dadurch gekennzeichnet, daß man die anorganischen Zuschlagstoffe für die zu vulkanisierenden Kautschukmischungen mit Ammoniak oder mit einem Amin vorbehandelt.

2. Methode nach Anspruch 1, worin die anorganischen Zuschlagstoffe Ruße, Zinkoxide und/oder Silikate sind.

3. Methode nach Anspruch 1, worin Ammoniak, Diaminoheptan oder Ethanolamin benutzt wird.

4. Verwendung der nach Anspruch 1 vorbehandelten anorganischen Zuschlagstoffe bei der Herstellung vulkanisierbarer Kautschukmischungen.

**Europäisches Patentamt**

# EUROPÄISCHER RECHERCHENBERICHT

Nummer der Anmeldung

**EP 91 10 5576**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-1 730 485  (C.T. MERWYN)<br>* Anspruch 1; Seite 1, Zeilen 56-93 *<br>— — — | 1-4 | C 08 K 9/02<br>C 08 K 9/04<br>C 08 L 21/00 |
| X | GB-A-6 382 94  (COMPAGNIE INDUSTRIELLE DE CREDIT)<br>* Anspruch 1 *<br>— — — | 1-2,4 | |
| X | GB-A-1 054 620  (POLYMER CO.)<br>* Anspruch 1 *<br>— — — | 1-2,4 | |
| A | KAUTSCHUK UND GUMMI KUNSTSTOFFE, Band 42, Nr. 1, Januar 1989, Seiten 16-21; S. LÜPFERT: "Nitrosamine in der Kautschukindustrie"<br>* Vollständiger Artikel *<br>— — — — — | 1 | |

**RECHERCHIERTE SACHGEBIETE (Int. Cl.5)**

C 08 K
C 08 L 21/00

Der vorliegende Recherchenbericht wurde für alle Patentansprüche erstellt

| Recherchenort | Abschlußdatum der Recherche | Prüfer |
|---|---|---|
| Den Haag | 14 August 91 | VAN HUMBEECK F.W.C. |